(19) Europäisches Patentamt
European Patent Office
Office européen des brevets

(11) Veröffentlichungsnummer: 0 006 988
B1

(12) # EUROPÄISCHE PATENTSCHRIFT

(45) Veröffentlichungstag der Patentschrift: 19.05.82

(21) Anmeldenummer: 79101609.0

(22) Anmeldetag: 25.05.79

(51) Int. Cl.³: H 04 L 7/02, H 04 L 25/40, H 04 L 25/02, H 04 L 5/22, H 03 K 13/01

(54) **Anordnung zur Taktsignalrückgewinnung bei der digitalen Signalübertragung.**

(30) Priorität: 29.05.78 DE 2823343

(43) Veröffentlichungstag der Anmeldung: 23.01.80 Patentblatt 80/2

(45) Bekanntmachung des Hinweises auf die Patenterteilung: 19.05.82 Patentblatt 82/20

(84) Benannte Vertragsstaaten: AT CH DE FR GB IT NL SE

(56) Entgegenhaltungen:
DE - A - 2 324 853
DE - A1 - 2 621 403
DE - A1 - 2 703 395
FR - A1 - 2 332 660

(73) Patentinhaber: SIEMENS AKTIENGESELLSCHAFT
Berlin und München
Postfach 22 02 61
D-8000 München 22 (DE)

(72) Erfinder: Ringelhaan, Otmar, Dipl.-Ing.
Mauthäuslstrasse 36
D-8000 München 70 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 006 988 B1

# Anordnung zur Taktsignalrückgewinnung bei der digitalen Signalübertragung

Die Erfindung bezieht sich auf eine Anordnung zur Taktrückgewinnung bei der digitalen Signalübertragung mit einem Phasendiskriminator, der einen Steuereingang für das Eingangssignal enthält und dessen Signalausgang über ein erstes Schleifenfilter mit dem Regeleingang des ersten spannungsgesteuerten Oszillators verbunden ist.

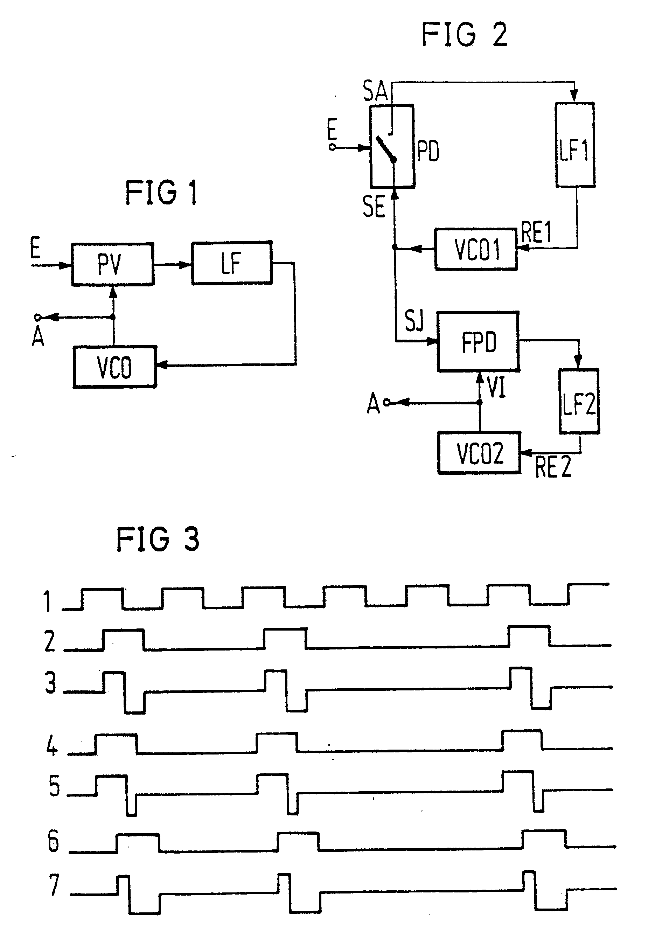

In den Streckenregeneratoren von PCM-Übertragungsstrecken und gegebenenfalls auch nach digitalen Schnittstellen in den Endgeräten ist die Rückgewinnung des Taktsignals aus dem übertragenen digitalen Signal erforderlich. Wegen der schnelleren Neusynchronisation im Übertragungssystem wird dabei einer aktiven Taktsignalerzeugung der Vorzug gegeben, bei der ein örtliches Taktsignal erzeugt wird und mittels Phasenvergleich zwischen diesem und dem empfangenen digitalen Eingangssignal das örtlich erzeugte Taktsignal nachgeregelt wird. Zur Nachregelung dieser Taktsignale sind Phasenregelschleifen bekannt, bei denen der Ausgang eines Phasendiskriminators über ein sogenanntes Schleifenfilter mit dem Steuereingang eines spannungsgesteuerten Oszillators verbunden ist. Eine derartige Anordnung ist in der Fig. 1 dargestellt. Bei dem verwendeten Phasendiskriminator kann es sich im Falle, daß beide miteinander zu vergleichende Signale kontinuierlich vorliegen, um ein Exklusiv-ODER-Glied handeln. Bei der digitalen Signalübertragung ist das Eingangssignal in der Regel aber diskontinuierlich, so daß in diesem Falle der Phasendiskriminator durch einem vom Eingangssignal hinsichtlich seiner Schleißzeiten gesteuerten Schalter realisiert wird. Das Schleifenfilter besteht aus der Kombination eines Tiefpaßfilters und eines Integrators zur Erzeugung der Steuerspannung für den spannungsgesteuerten Oszillator. Vom spannungsgesteuerten Oszillator wird das örtlich erzeugte Taktsignal sowohl an den Vergleichereingang als auch an den Taktsignalausgang abgegeben.

Eine derartige Phasenregelschleife kann als Bandpaß bestimmter Güte für das Taktsignal aufgefaßt werden. Die Güte dieses Bandpasses ist von der Grenzfrequenz des Tiefpaßfilters im Schleifenfilter unmittelbar abhängig. Eine sehr niedrige Grenzfrequenz des Schleifenfilters und damit eine hohe Güte des Bandpasses gestattet nur langsame Schwankungen des Steuersignals des spannungsgesteuerten Oszillators und damit auch nur langsame Schwankungen im örtlich erzeugten Taktsignal. Die erwünschte hohe Güte geht aber auf Kosten des Fangbereiches, in dem die Phasenregelschleife sich auf die Taktfrequenz der digitalen Signale einstellen kann.

Die Forderung nach hoher Güte des Bandpasses und damit niedriger Grenzfrequenz der Phasenregelschleife entsprechend kleinem Fangbereich ist mit Hilfe eines spannungsgesteuerten Quarzoszillators realisierbar. In diesem Falle ergibt sich aber ein beträchtlicher Aufwand durch den teuren Quarz.

Eine Möglichkeit zur Realisierung eines großen Fangbereichs bei großer Güte ergibt sich durch die Verwendung einer Fangschaltung, wie sie beispielsweise in der DE—AS 14 63 036 beschrieben ist. In diesem Falle ergibt sich aber neben dem Aufwand für die Fangschaltung eine relativ lange Synchronisierzeit der Kombination.

Die Aufgabe der Erfindung besteht also darin, eine Anordnung der eingangs erwähnten Art zu entwickeln, bei der mit einem möglichst geringen Aufwand kurze Synchronisierzeiten erreicht werden und neben einem großen Fangbereich auch eine hohe Güte der entsprechend aufgebauten Phasenregelschleife gewährleistet ist.

Erfindungsgemäß wird die Aufgabe dadurch gelöst, daß bei digitalen Signalen im RZ-Format der Ausgang des ersten spannungsgesteuerten Oszillators sowohl mit dem Signaleingang des Phasendiskriminators als auch mit dem Signaleingang eines Frequenz-Phasen-Vergleichers verbunden ist, daß der Signalausgang dieses Frequenz-Phasen-Vergleichers über ein zweites Schleifenfilter mit dem Regeleingang eines zweiten spannungsgesteuerten Oszillators verbunden ist und daß der Ausgang des zweiten spannungsgesteuerten Oszillators sowohl mit dem Takteingang des Frequenz-Phasen-Vergleichers als auch mit dem Ausganganschluß der Anordnung verbunden ist.

Eine bevorzugte Weiterbildung der erfindungsgemäben Anordnung ergibt sich dadurch, daß es sich bei wenigstens einem der spannungsgesteuerten Oszillatoren um einen astabilen Multivibrator handelt.

Eine weitere bevorzugte Ausführungsform der Erfindung ergibt sich dadurch, daß das erste Schleifenfilter eine vergleichsweise hohe Grenzfrequenz und das zweite Schleifenfilter eine vergleichsweise niedrige Grenzfrequenz aufweist.

Im Hinblick auf eine universelle Einsetzbarkeit der Erfindung its eine Variante der erfindungsgemä*ß*en Anordnung zweckmäßig, bei der für die Verarbeitung von digitalen Signalen im NRZ-Format ein Differenzierglied mit nachgeschaltetem Gleichrichter dem Phasendiskirminator vorgeschaltet ist.

Die Erfindung soll im folgenden anhand der Zeichnung näher erläutert werden.

In der Zeichnung zeigt

Fig. 1 eine Phasenregelschleife nach dem Stande der Technik,

Fig. 2 eine Phasenregelschleife nach der Erfindung und

Fig. 3 ein Phasendiagramm zur Fig. 2.

Die Fig. 1 wurde bei der Darstellung des Standes der Technik bereits ausreichend erläutert, so daß auf weitere Ausführungen dazu verzichtet wird.

Fig. 2 zeigt die erfindungsgemäße Taktregelschleife, die aus der Hintereinanderschaltung einer Phasenregelschleife und einer Frequenz- und Phasenregelschleife besteht. Die Phasenregelschleife entspricht weitgehend der nach dem Stande der Technik, sie weist also eingangsseitig einen Phasenvergleicher PD auf, mit dessen Signalausgang über ein erstes Tiefpaßfilter LF1 der Steuereingang RE1 eines ersten spannungsgesteuerten Oszillators VCO1 verbunden ist. Als spannungsgesteuerter Oszillator wurde ein bekannter steuerbarer astabiler Multivibrator vorgesehen. Die Ausgangssignale des ersten Oszillators VCO1 werden sowohl dem Signaleingang SE des Phasendiskriminators PD als auch dem Signaleingang SI eines Frequenz-Phasen-Vergleichers zugeführt, der über ein zweites Schleifenfilter LF2 ein Ausgangssignal an den Steuereingang RE2 eines zweiten Spannungsgesteuerten Oszillators abgibt. Der zweite spannungsgesteuerte Oszillator VC2 ist ebenfalls als astabiler Multivibrator ausgeführt und gibt das von ihm erzeugte örtliche Taktsignal sowohl an den Ausgangsanschluß A als auch an den Vergleichereingang VI des Frequenz-Phasen-Vergleichers ab.

Zur Erläuterung der Wirkungsweise der Phasenregelschleife nach der Fig. 2 sei das Impulsdiagramm nach der Fig. 3 herangezogen. In diesem Impulsdiagramm ist mit 1 das vom ersten spannungsgesteuerten Oszillator VCO1 abgegebene Taktsignal bezeichnet. Mit 2 ist ein diskontinuierlich auftretendes Eingangssignal bezeichnet, dessen Impulse in Normlage auftreten. Als Normlage wird dabei eine Phasenverschiebung zwischen den Taktimpulsen und den Eingangssignalimpulsen von 90° bezeichnet. In diesem Falle ist während der Dauer der Eingangssignalimpulse nach Zeile 2 der Schalter im Phasenvergleicher PD geschlossen, so daß sich als Ausgangssignal dieses Phasenvergleichers die in der Zeile 3 dargestellte Impulsfolge ergibt. Es ist ersichtlich, daß der Gleichstrommittelwert der in Zeile 3 dargestellten Impulsfolge gleich 0 ist, also keine Verstimmung des ersten spannungsgesteuerten Oszillators VCO1 erfolgt.

In der Zeile 4 ist erneut das Eingangssignal, hier aber außerhalb der Normlage, in einer Phasenverschiebung von nur 45° der Signalimpulse zu den Taktimpulsen dargestellt. In diesem Falle ergibt sich als Ausgangssignal des Phasendiskriminators während dessen Schließdauer das in Zeile 5 dargestellte Signal mit Impulsen, deren positiver Teil deutlich überwiegt. Der Gleichstrommittelwert dieser Impulse ergibt einen positiven Wert, der als Stellgröße am ersten spannungsgesteuerten Oszillator VCO1 wirksam wird und zu einer Phasenverschiebung des örtlich erzeugten Taktsignals im gewünschten Sinne führt.

In der Zeile 6 ist erneut das Eingangssignal außerhalb der Normlage dargestellt, die Einzelimpulse sind gegenüber den Taktimpulsen um 135° verschoben. Dadurch ergibt sich das in Zeile 7 dargestellte Ausgangssignal des Phasenvergleichers mit einem deutlichen Überwiegen des negativen Teils, so daß der im ersten Schleifenfilter LF1 enthaltene Integrator eine negative Nachstellspannung für den ersten spannungsgesteuerten Oszillator VCO1 erzeugt und dadurch eine entsprechende Phasenregelung bewirkt.

Wegen der vergleichsweise hohen Grenzfrequenz dieses Schleifenfilters im Gegensatz zur herkömmlichen Anordnung kann sich starker Jitter bei dem vom Oszillator erzeugten Taktsignal ergeben. Das stark verjitterte, aber nunmehr kontinuierliche Taktsignal das ersten Oszillators VCO1 gelangt zum Signaleingang SI des Frequenz-Phasenvergleichers FPD. In diesem Vergleicher sind ein Frequenzdiskriminator und ein Phasendiskriminator parallelgeschaltet.

Wegen der vergleichsweise niedrigen Grenzfrequenz des zweiten Schleifenfilters LF2 wird während des Auftretens des stark verjitterten Eingangssignals des Ausgangssignal des im Frequenz-Phasenvergleichers angeordneten Phasendiskriminators vom Schleifenfilter gesperrt. Bei diesem Ausgangssignal handelt es sich um die Differenz zwischen dem im zweiten spannungsgesteuerten Oszillator VCO2 erzeugten Taktsignal und dem Eingangssignal. Zu diesem Zeitpunkt ist aber der Frequenzdiskriminator wirksam, der nur eine schwankende Gleichspannung an das zweite Schleifenfilter LF2 abgibt, die nach entsprechender Integrierung dem zweiten Steuereingang RE2 des zweiten spannungsgesteuerten Oszillators VCO2 zugeführt wird und eine entsprechende Nachregelung dieses Oszillators bewirkt. Ist durch diese Nachregelung der Frequenzversatz zwischen dem vom zweiten spannungsgesteuerten Oszillator erzeugten Taktsignal und den Eingangssignalen bis auf eine Phasenabweichung verschwunden, dann ist auch das Ausgangssignal des Frequenzdiskriminators gleich Null geworden. In diesem Bereich wird aber der Phasendiskriminator wirksam und bewirkt eine weitere Nachregelung des zweiten spannungsgesteuerten Oszillators VCO2, nunmehr aber nur noch hinsichtlich dessen Phase. Nach erfolgter Synchronisierung ist am Ausgangsanschluß A ein örtlich erzeugtes Taksignal entnehmbar, das mit dem Takt der Eingangssignalefrequenz- und phasensynchron ist.

**Patentansprüche**

1. Anordnung zur Taktsignalrückgewinnung bei der digitalen Signalübertragung mit einem Phasendiskriminator (PD), der einen Steuereingang (E) für das Eingangssignal enthält und dessen Signalausgang (SA) über ein erstes Schleifenfilter (LF1) mit dem Regeleingang (RE1) des ersten spannungsgesteuerten Oszillators (VCO1) verbunden ist, dadurch gekennzeichnet, daß bei digitalen Signalen im RZ-Format der Ausgang des ersten spannungsgesteuerten Oszillators (VCO1) sowohl mit dem Signalein-

gang (SE) des Phasendiskriminators (PD) als auch mit dem Signaleingang (SJ) eines Frequenz-Phasen-Vergleichers (FPD) verbunden ist, daß der Signalausgang dieses Frequenz-Phasen-Vergleichers über ein zweites Schleifenfilter (LF2) mit dem Regeleingang (RE2) eines zweiten spannungsgesteuerten Oszillators (VCO2) verbunden ist und daß der Ausgang des zweiten spannungsgesteuerten Oszillators sowohl mit dem Takteingang (VI) des Frequenz-Phasen-Vergleichers (FPD) als auch mit dem Ausgangsanschluß (A) der Anordnung verbunden ist.

2. Anordnung nach Patentanspruch 1, dadurch gekennzeichnet, daß es sich bei wenigstens einem der spannungsgesteuerten Oszillatoren um einen astabilen Multivibrator handelt.

3. Anordnung nach Patentansprüchen 1 oder 2, dadurch gekennzeichnet, daß das erste Schleifenfilter (LF1) eine vergleichsweise hohe Grenzfrequenz und das zweite Schleifenfilter (LF2) eine vergeleichsweise niedrige Grenzfrequenz auf weist.

4. Anordnung nach Patentanspruch 1, dadurch gekennzeichnet, daß bei digitalen Signalen im NRZ-Format ein Differenzierglied mit nachgeschaltetem Gleichrichter dem Phasendiskriminator vorgeschaltet ist.

**Claims**

1. Arrangement for the clock signal recovery in the digital signal transmission comprising a phase discriminator (PD) which contains a control input (E) for the input signal and whose signal output (SA) is connected to the control input (RE1) of the first voltage-controlled oscillator (VCO1) by means of a first loop filter (LF1), characterised in that in the case of digital signals in the RZ-form the output of the first voltage-controlled oscillator (VCO1) is connected both to the signal input (SE) of the phase discriminator and to the signal input of a frequency-phase comparator (FPD), that the signal output of this frequency-phase comparator (FPD) is connected to the control input (RE2) of a second voltage-controlled oscillator (VCO2) by means of a second loop filter (LF2), and that the output of the second voltage-controlled oscillator is connected both to the clock signal input (VI) of frequency-phase comparator (FPD) and to the output terminal (A) of the arrangement.

2. Arrangement as claimed in claim 1, characterised in that at least one of the voltage-controlled oscillators is an astable multivibrator.

3. Arrangement as claimed in claims 1 or 2, characterised in that the first loop filter (LF1) has a comparatively high limiting frequency and the second loop filter (LF2) has a comparatively low limiting frequency.

4. Arrangement as claimed in claim 1, characterised in that in the case of digital signals in the NRZ-form, a differentiating element with a following rectifier is connected preceding the phase discriminator.

**Revendications**

1. Dispositif pour récoupérer les signaux de cadence dans la transmission numérique de signaux, à discriminateur de phase (PD) comportant une entrée de commande (E) pour les signaux d'entrée et dont la sortie des signaux (SA) est reliée, par l'intermédiaire d'un premier filtre en boucle (LF1), à l'entrée du régulateur (RE1) du premier oscillateur (VCO1) commandé par la tension, caractérisé par le fait que dans le cas de signaux numériques dans le format RZ, la sortie du premier oscillateur (VCO1) commandée par la tension est reliée tant à l'entrée des signaux (SE) du discriminateur de phase (PD) qu' à l'entrée des signaux (SJ) d'un comparateur fréquence-phase (FPD), que la sortie des signaux de ce comparateur fréquence-phase est reliée, par l'intermédiaire d'un second filtre en boucle (LF2), à l'entrée du régulateur (RE2) d'un second oscillateur (VCO2) commandé par la tension, et que la sortie du second oscillateur est reliée tant à l'entrée des signaux de cadence (VI) du comparateur fréquence-phase (FPD) qu'à la borne de sortie du dispositif.

2. Dispositif selon la revendication 1, caractérisé par le fait qu'il s'agit pour au moins l'un des oscillateurs commandés par la tension d'un multivibrateur astable.

3. Dispositif selon les revendications 1 ou 2, caractérisé par le fait que le premier filtre en boucle (LF1) comporte une fréquence de coupure relativement élevée et que le second filtre en boucle (LF2) présente une fréquence de coupure comparativement basse.

4. Dispositif selon la revendication 1, caractérisé par le fait que dans le cas de signaux dans le format NRZ, un circuit différenciateur à redresseur aval est monté en amont du discriminateur de phase.

FIG 2

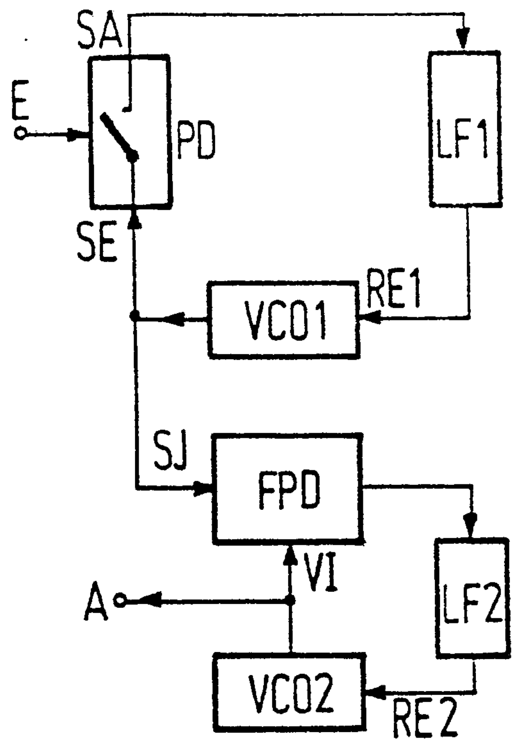


FIG 1

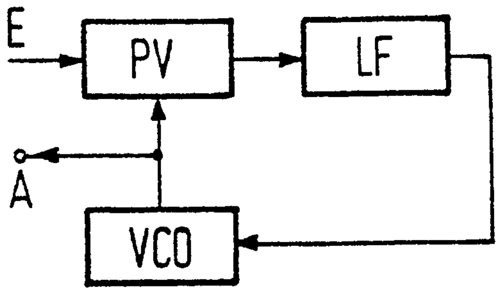


FIG 3